# EUROPEAN PATENT SPECIFICATION

(11) **EP 4 393 870 B1**
(45) Date of publication and mention of the grant of the patent: **14.01.2026**
(21) Application number: 23211696.2
(22) Date of filing: 23.11.2023
(51) Int. Cl.: C01B 3/04, H01M 8/04014, H01M 8/0606, H01M 8/1004, H01M 8/22, B01D 53/02, B01D 53/04, B01J 23/46

(54) **AMMONIA FUEL CELL SYSTEM CAPABLE OF FAST ADSORPTION-DESORPTION SWITCHING BY SELFEVAPORATION OF AMMONIA AND POWER GENERATION METHOD THEREOF**
AMMONIAK-BRENNSTOFFZELLENSYSTEM MIT SCHNELLER ADSORPTIONS-DESORPTIONS-UMSCHALTUNG DURCH SELBSTVERDAMPFUNG VON AMMONIAK UND STROMERZEUGUNGSVERFAHREN DAFÜR
SYSTÈME DE PILE À COMBUSTIBLE À AMMONIAC CAPABLE DE COMMUTATION RAPIDE D'ADSORPTION-DÉSORPTION PAR AUTO-ÉVAPORATION D'AMMONIAC ET SON PROCÉDÉ DE PRODUCTION D'ÉNERGIE

(30) Priority: 07.12.2022 CN 202211566909
(43) Date of publication of application: 03.07.2024
(73) Proprietor: Fuzhou University, 350108 Fuzhou Fujian (CN); FZU Zijin Hydrogen Power Technology Co., Ltd, Fuzhou Fujian 350100 (CN)
(72) Inventor: JIANG, Lilong, Fuzhou, 350108 (CN); LUO, Yu, Fuzhou, 350108 (CN); LIN, Li, Fuzhou, 350108 (CN); ZHANG, Lixuan, Fuzhou, 350108 (CN); YOU, Jiacheng, Fuzhou, 350108 (CN); ZHANG, Qing, Fuzhou, 350108 (CN)
(74) Representative: Zhu, Junyi

(56) References cited:
- CN-A- 110 277 578
- CN-A- 112 050 202
- CN-A- 114 687 989
- CN-A- 115 036 539

## Description

### Technical field

The invention relates to the technical field of ammonia fuel cells, in particular to an ammonia fuel cell system capable of rapid adsorption and desorption switching by self-evaporation of ammonia and a power generation method thereof.

### Background

A fuel cell is a device that converts the chemical energy of fuel directly into electrical energy. Since the fuel cell converts the Gibbs free energy in the chemical energy of the fuel into electrical energy through an electrochemical reaction, it is not limited by the Carnot cycle effect, has high efficiency, and has no noise and pollution during operation. Therefore, from the perspective of saving energy and protecting the ecological environment, fuel cells have good development prospects. Hydrogen is currently the most ideal fuel for fuel cell applications. It has the advantages of no adverse side reactions and only water discharge, but its volumetric energy density is low (10-35 mol L⁻¹ H₂), and its cost, storage and transportation, and safety costs are high. Among non-hydrogen fuels, hydrocarbon fuels have a high volumetric energy density (21-49mol L⁻¹ H₂), are cheap to manufacture, and are convenient for storage and transportation. However, carbon deposition effects can occur during the reaction to reduce the performance of fuel cells and emit CO₂. Therefore, the application requirements cannot be met. The use of ammonia as fuel has the advantages of high volume energy density (60 mol L⁻¹ H₂), low cost, convenient storage and transportation, no carbon deposition effect, and no carbon emissions. It has become a promising solution. Therefore, ammonia fuel cells have received extensive attention. Ammonia fuel cells can be divided into direct ammonia fuel cells and indirect ammonia fuel cells according to fuel utilization methods. Among them, the direct ammonia fuel cell is mainly a solid oxide fuel cell (SOFC), the operating temperature is usually 800-1000 ° C, when ammonia is used as fuel, it can be directly connected to the fuel cell to generate electricity without external reforming, and does not require noble metal catalysis, thermoelectric cogeneration energy conversion efficiency is high. However, the current technology of direct ammonia fuel cells is still immature. The indirect ammonia fuel cell uses ammonia as the carrier of hydrogen, replaces the storage and transportation of the existing high-pressure hydrogen storage and transportation through the storage and transportation of low-cost liquid NH₃, and transports liquid NH₃ to the site where hydrogen is used. NH₃ is stored in metals such as Ru and Ni. Under the catalysis of the catalyst, it is almost completely decomposed into 75%H₂ +25%N₂ mixed gas, which is directly supplied to the hydrogen fuel cell for power generation, thereby developing a new hydrogen utilization route - indirect ammonia fuel cell. In the development of indirect ammonia fuel cells, the research focus and technical difficulties include the research focus and technical difficulties include the high-performance low-temperature ammonia decomposition hydrogen production catalyst and reactor technology and the key technology of high-efficiency and compact indirect ammonia fuel cell system integration. Among them, ammonia decomposition needs to be carried out at high temperature (450-500°C), which can be heated by combustion. Combustion can be divided into direct combustion and catalytic combustion. Catalytic combustion refers to the combustion of combustibles at a lower temperature under the action of a catalyst. Compared with direct combustion, the catalytic combustion temperature is lower, the combustion is relatively complete, and it is safer and more environmentally friendly. The fuel cell adopts the most mature proton exchange membrane fuel cell (PEMFC) on the market at present. Its operating temperature is low (60-80°C), and it starts and stops quickly. However, protons in the perfluoro sulfonic acid membrane in the proton exchange membrane fuel cells can react with high concentrations of ammonia to generate NH₄⁺ ions, which can lead to irreversible degradation of the performance of proton exchange membrane fuel cells (PEMFC). Ammonia decomposition cannot be 100% completely decomposed under the conditions of industrial equipment, and there is a small amount of residual ammonia. In order to ensure the continuous operation of the system, it is necessary to pass the ammonia decomposition exhaust gas through an ammonia adsorption device to remove residual ammonia (the ammonia concentration must be lower than 0.1 ppm) before entering the fuel cell. Therefore, the ammonia fuel cell system needs to couple a series of component devices such as ammonia decomposition device, ammonia removal device, and hydrogen fuel cell. There are two types of ammonia adsorption devices: temperature swing adsorption (TSA) and pressure swing adsorption (PSA). Among them, the temperature swing adsorption regeneration is thorough, the recovery rate is high, and the product loss is small, and it is usually used in the cycle of removing trace impurities or difficult-to-desorb impurities. After the adsorbent in the temperature swing adsorption device is saturated, it needs to be desorbed. The desorption methods are mainly divided into online desorption and offline desorption. Online desorption can better realize the recycling of energy, and it is easy to realize the automation of the system, which helps to save operating costs. Therefore, the ammonia removal device of this system adopts temperature swing adsorption, and online desorption is used for desorption.

CN115036539A discloses an apparatus and a method for generating power using a fuel cell comprising starting a heating device of a catalytic ammonia cracker. The heating device can be a tail gas combustion device. When the temperature of the catalytic ammonia cracker reaches 480°C ammonia gas is sent to the catalytic ammonia cracker and ammonia is split into hydrogen and nitrogen. The hydrogen and nitrogen is sent to an ammonia removal device. The hydrogen and nitrogen mixture free of ammonia is further treated and then added to a fuel cell.

The existing technology has the following problems: 1) If there is no external heating, the evaporation of ammonia will cause the pipeline to freeze, and the flow rate of ammonia gas will drop rapidly. At present, the electric heating scheme is mainly used. When the amount of ammonia evaporation is large, it absorbs more heat and consumes more energy. 2) The catalytic combustion process is unstable, the temperature is not easy to control, and there is a risk of flame combustion and flame burnback leading to high temperature at the front of the reactor and system failure. 3) The temperature swing adsorption device (TSA) currently on the market mainly uses electric heating for online desorption, which is slow to heat and consumes a lot of electric energy, and it takes a long time (>8h) to cool down after high-temperature desorption to continue adsorption. 4) Waste heat at the back end of the system is wasted, while heating air and ammonia at the front end consumes a lot of electric energy and heat energy, and the energy utilization efficiency of the system is low.

### Detailed Description

Aiming at the deficiencies of the prior art, the present invention proposes an ammonia fuel cell system capable of fast adsorption-desorption switching by ammonia self-evaporation .

The present invention adopts following technical scheme:
An ammonia fuel cell system capable of rapid adsorption-and-desorption switching by self-evaporation of ammonia, comprising an ammonia decomposition reactor, an ammonia tank, a first heat exchanger, a fuel tank, a first blower, a second heat exchanger, an adsorption column device, a fuel battery, gas circulation system and exhaust gas combustion system; the gas outlet of the ammonia tank communicates with the ammonia gas inlet on the ammonia decomposition reactor through the first heat exchanger, and the decomposition gas outlet on the ammonia decomposition reactor communicates with the adsorption inlet of the adsorption column device, and the product gas generated by the decomposition of ammonia in the ammonia decomposition reactor is preheated by the first heat exchanger to the raw ammonia gas. The fuel tank communicates with the ammonia decomposition reactor to provide fuel gas to the ammonia decomposition reactor.

The adsorption gas outlet of the adsorption column device communicates with the hydrogen fuel inlet of the fuel cell to provide H2+N2 mixed gas fuel for the fuel cell. The stack outlet of the fuel cell, via the gas circulation system, communicates with the exhaust gas inlet of the adsorption column device. The exhaust gas outlet of the adsorption column device communicates with the exhaust gas combustion system.

The gas outlet end of the first blower, via the second heat exchanger, communicates with the fuel gas inlet of the ammonia decomposition reactor. The flue gas outlet of the ammonia decomposition reactor, via the second heat exchanger, communicates with the flue gas inlet of the adsorption column device. The flue gas generated by the ammonia decomposition reactor passes through the second heat exchanger to preheat the air discharged by the first blower.

The ammonia decomposition reactor includes a reactor inner tube and a reactor outer tube, the reactor inner tube is an ammonia decomposition zone filled with an ammonia decomposition catalyst, and the reactor outer tube is a catalytic combustion zone filled with a catalytic combustion catalyst, the outer tube of the reactor is set on the outside of the inner tube of the reactor, the two ends of the inner tube of the reactor are respectively provided with the inlet of ammonia gas and the outlet of decomposition gas, and the two sides of the outer tube of the reactor are respectively provided with a fuel gas inlet and a flue gas outlet, the ammonia gas inlet communicates with the decomposition gas outlet, and the fuel gas inlet communicates with the flue gas outlet.

The ammonia decomposition catalyst is a ruthenium-based ammonia decomposition catalyst.

The flue gas is a mixture of water vapor and nitrogen at a temperature of 600 °C- 680 °C produced by the catalytic combustion of hydrogen and oxygen. The product gas is a mixture of hydrogen, nitrogen and incompletely decomposed ammonia produced after catalytic decomposition of ammonia.

The gas circulation system includes a condenser and a gas-water separator, and the exhaust gas combustion system includes a flame arrester and an exhaust gas burner. The stack outlet of the fuel cell is connected sequentially to the condenser, the gas-water separator, and the exhaust gas inlet of the adsorption column device. The exhaust gas outlet of the adsorption column device is connected to the exhaust gas burner after passing through the flame arrester.

The air inlet of the adsorption column device communicates with the second external blower. The second blower is used for rapidly cooling the adsorption column device, and the air outlet of the adsorption column device communicates with the external atmosphere through a pipeline and a valve.

Preferably, the air outlet of the fuel cell is arranged in a direction towards the ammonia tank.

The fuel cell is a proton exchange membrane fuel cell.

A preheater is provided on a pipeline between the first air blower and the ammonia decomposition reactor.

The adsorption column device includes at least two adsorption columns arranged in parallel, which are respectively used for the adsorption and desorption of ammonia in a reciprocating (repeated) cycle.

Preferably, the adsorption column device includes two adsorption columns arranged in parallel, namely adsorption column A and adsorption column B, one of which is used for the adsorption of ammonia, while the other is used for the desorption of ammonia. The cycle is repeated between the two.

Each of the adsorption columns includes an adsorption chamber provided with an adsorbent and a flue gas pipeline. The adsorption chamber is set outside the flue gas pipeline and comprises an adsorption/desorption outlet and an adsorption/desorption inlet, which form a connected pair. The flue gas pipeline comprises a smoke/air inlet and a smoke/air outlet, which form a connected pair.

When the adsorption/desorption inlet is connected to the decomposed gas outlet, it functions as the adsorption inlet of the adsorption column device, and the corresponding adsorption/desorption outlet functions as the adsorption gas outlet of the adsorption column device. When the adsorption/desorption inlet is connected to the stack outlet, it functions as the exhaust gas inlet of the adsorption column device, and the corresponding adsorption/desorption outlet functions as the exhaust gas outlet of the adsorption column device.

When the smoke/air inlet is connected to the smoke outlet, it is the smoke inlet of the adsorption column device, and the corresponding smoke/air outlet is the smoke gas of the adsorption column device outlet; when the smoke/air inlet is connected to the second blower, it is the air inlet of the adsorption column device, and the corresponding smoke/air outlet is the air outlet of the adsorption column device.

The adsorption column device is also provided with a first inlet, a second inlet, a third inlet, and a fourth inlet. The first inlet and the second inlet are respectively connected, through a gas path and a valve arranged on the gas path, to the inlet of the adsorption/desorption device. The gas/desorption air inlet is connected, and the third inlet and the fourth inlet are respectively connected, through the gas path and the valve provided on the gas path, to the smoke/air inlet.

Preferably, spiral fins are provided on the outer wall of the flue gas pipeline.

A pressure reducing valve and a flow controller are also provided on the pipeline between the gas outlet of the ammonia tank and the first blower.

A method for generating electricity in an ammonia fuel cell system capable of rapid adsorption-and-desorption switching through ammonia self-evaporation (this method does not form part of the invention), comprising the following steps:
S 1. When starting up, blow fuel and preheated air into the reactor outer tube of the ammonia decomposition reactor, and after mixing, a catalytic combustion reaction will occur to generate flue gas, thereby causing the reactor outer tube and the reactor inner tube to heat up;
S 2. When a temperature the inner tube of the reactor rises above 450°C, feed ammonia gas into the reactor inner tube of the ammonia decomposition reactor, and the ammonia gas decomposes under the action of the catalyst to generate a mixed gas of hydrogen and nitrogen;
S 3. Pass the mixed gas of hydrogen and nitrogen generated in the inner tube of the reactor into the adsorption column device, and after removing the residual ammonia in the mixed gas of hydrogen and nitrogen, the remaining hydrogen and nitrogen enter the fuel cell, thereby providing fuel cells with fuel to generate electricity.

In step S3, the hydrogen and nitrogen mixed gas generated in the inner tube of the reactor are passed through the first heat exchanger to the adsorption column device, wherein the first heat exchanger transfers the heat of the hydrogen nitrogen mixed gas to the ammonia gas; the flue gas from the outer pipe of the reactor passes through the second heat exchanger and then enters the adsorption column device, and the second heat exchanger transfers the heat of the flue gas to the input air of the second blower.

The method also includes step S4, passing the remaining hydrogen and nitrogen in the fuel cell into the adsorption column device for purging and desorption.

The lithium battery can be used to provide the starting power supply for the system. After the fuel cell starts to generate electricity, it can generate electricity for the lithium battery, or supply power for its own load or an external load.

The technical solution of the present invention has the following advantages:
A. The present invention adopts a system thermal coupling scheme to blow the hot air (50-60°C) from the outlet of the air-cooled stack when the proton exchange membrane fuel cell is in operation to the ammonia tank or the cabinet where the ammonia tank is placed, and the other side of the cabinet wall is arranged with The air vent allows the hot air to be blown out from the outlet of the air-cooled reactor, and discharged from the air vent through the cabinet to increase the air temperature in the cabinet (40-50°C) through thermal convection, thereby heating the ammonia tank and realizing the self-evaporation of ammonia.
B, the present invention controls the temperature of catalytic combustion by controlling the main influencing factors of catalytic combustion in the ammonia decomposition reactor , i.e. fuel flow (hydrogen-nitrogen mixture), air flow and preheating temperature, so that hydrogen-nitrogen mixture can react in ammonia decomposition The temperature of the high-temperature flue gas generated by catalytic combustion in the reactor is stabilized at 600-680°C, and at the same time, it can prevent the high temperature at the front end of the ammonia decomposition reactor caused by the flame burning back.
C. The present invention adopts the scheme of alternate adsorption and desorption of double adsorption columns, and the online self-desorption of the adsorption columns can be realized by controlling the direction of the gas and the temperature rise and fall of the adsorption columns. The adsorption column adopts the structure of inner tube (flue gas pipeline) + outer tube (adsorption chamber). The inner tube is filled with high-temperature flue gas or low-temperature air, and the outer tube is filled with adsorbents and mixed gas of hydrogen, nitrogen and ammonia. The inner tube has helical fins to increase the contact surface area between the inner tube and the outer tube to improve heating or cooling efficiency. When the adsorption column A in the adsorption column device is adsorbed, the adsorption column B is desorbed, and the mixed gas of hydrogen, nitrogen and ammonia from the decomposition gas outlet of the ammonia decomposition reactor enters the adsorption column A through valve control. At this time, the adsorption column A should be at a low temperature. (10-30°C) to maintain a good adsorption capacity; the exhaust gas (hydrogen, nitrogen, water) at the outlet of the stack passes through the condenser and the water vapor separator, and the condensed water is discharged, and the remaining hydrogen and nitrogen are passed into the desorption state In the outer tube of the adsorption column B to realize the purging and desorption of the adsorbent in the adsorption column B. Through valve control, the high-temperature flue gas from the hot gas outlet of the second heat exchanger enters the flue gas pipeline of the adsorption column B to heat the adsorption column B, so that the adsorption column maintains a high temperature to improve the desorption effect. In addition, the present invention can be equipped with an electric heating rod in the adsorption column to realize rapid temperature rise of the adsorption column. Before the adsorption of adsorption column A is saturated, low-temperature air is blown into the inner tube of adsorption column B by the second blower in advance to realize rapid cooling of the high-temperature adsorption column and prepare for adsorption. The desorbed exhaust gas enters the waste gas burner for combustion to avoid exhaust gas pollution.
D. In the present invention, heat exchangers are installed at the ammonia inlet of the reactor and the hydrogen and nitrogen outlet of the reactor to exchange the heat of high temperature hydrogen and nitrogen (400-500°C) to the imported ammonia (finally heated to 200-300°C); A heat exchanger is installed at the air inlet of the reactor and the flue gas outlet of the reactor to transfer the heat of the high-temperature flue gas (500-600°C) at the reactor outlet to the inlet air (finally heated to 250-350 °C), Thereby effectively improving the thermal efficiency of the system. The high-temperature flue gas is a mixture of water vapor generated by catalytic combustion of hydrogen and oxygen and nitrogen that does not participate in the reaction. The high-temperature flue gas can provide energy for ammonia decomposition.

### Brief Description of the Drawings

In order to illustrate the specific implementation of the present invention more clearly, the accompanying drawings used in the specific implementation will be briefly introduced below. Obviously, the accompanying drawings in the following description are some implementations of the present invention, which are common to those skilled in the art. As far as the skilled person is concerned, other drawings can also be obtained based on these drawings on the premise of not paying creative work.
Fig. 1 shows a schematic diagram of the overall structure of an ammonia fuel cell system capable of rapid adsorption-and-desorption switching by ammonia self-evaporation of the present invention;
Fig. 2 shows a representation of an adsorption column device in the present invention;
Fig. 3 is a schematic diagram of the locations of the fins in the adsorption column in the present invention.

The markings in the figure are as follows:
1- Ammonia decomposition reactor, 11- Reactor inner pipe, 12- Ammonia gas inlet, 13-Decomposition gas outlet, 14- Reactor outer pipe, 15- Fuel gas inlet, 16- Flue gas outlet;
2- Ammonia tank; 3- First heat exchanger; 4- Fuel tank; 5- First blower; 6- Second heat exchanger;
7- Adsorption column device, 71- Adsorption column A, 72- Adsorption column B, 73-Adsorption chamber, 731-Aspiration/desorption inlet, 732-Aspiration/desorption gas outlet, 74-Flue gas pipeline, 741- smoke/air inlet, 742- smoke/air outlet, 743-fin;
8- fuel cell, 81- hydrogen fuel inlet, 82- stack outlet;
9- gas circulation system, 91- condenser, 92- gas-water separator;
10- tail gas combustion system, 101- flame arrester, 102- exhaust gas burner;
20- preheater; 30- second blower; 40- pressure reducing valve; 50- flow controller;
a- first inlet; b - second inlet; c - third inlet; d - fourth inlet; e - first valve; f - second valve; g - third valve; h - fourth valve; i- Fifth valve; j - sixth valve; k - seventh valve; m - eighth valve.

### Examples

The technical solutions of the present invention will be clearly and completely described below in conjunction with the accompanying drawings. Apparently, the described embodiments are part of the embodiments of the present invention, but not all of them. Based on the embodiments of the present invention, all other embodiments obtained by persons of ordinary skill in the art without making creative efforts belong to the protection scope of the present invention.

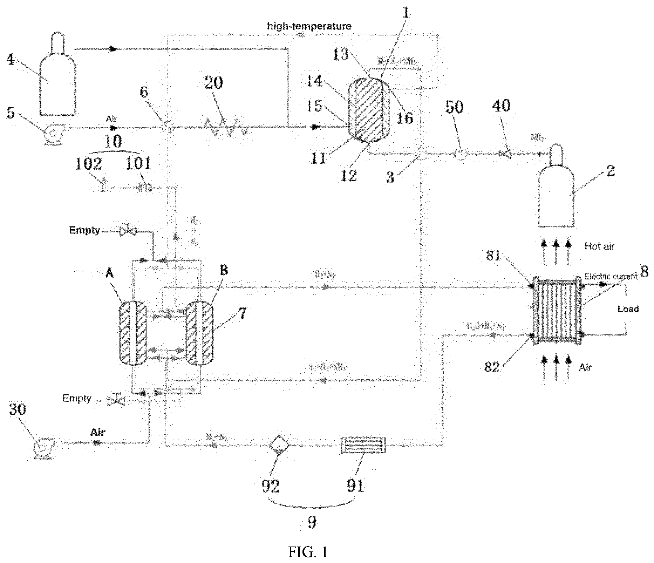

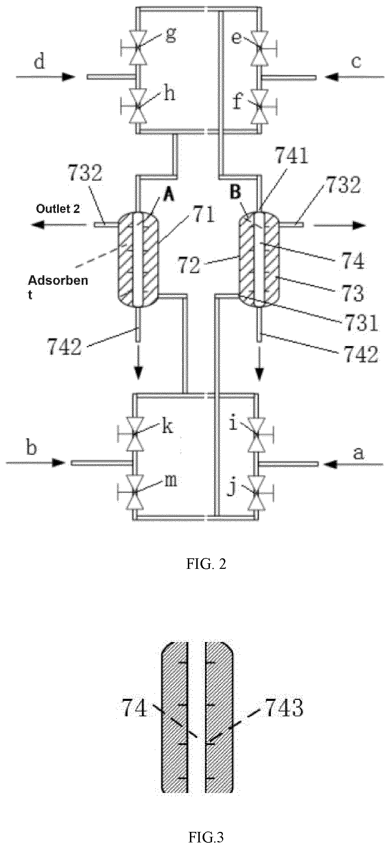

As shown in Fig.1 and Fig.2, the present invention provides an ammonia fuel cell system capable of rapid adsorption-and-desorption switching of ammonia self-evaporation, including an ammonia decomposition reactor 1, an ammonia tank 2 for supplying ammonia, and a first heat exchanger 3, a fuel tank 4 for providing fuel, a first blower 5 for providing oxygen for fuel combustion, a second heat exchanger 6, an adsorption column device 7, a fuel cell 8, a gas circulation system 9 and an exhaust gas combustion system 10. An outlet of the ammonia tank 2 via a pipeline passes through the cold air inlet and outlet of the first heat exchanger 3 and then connects with the ammonia gas inlet 12 on the ammonia decomposition reactor 1. The decomposition gas outlet 13 on the ammonia decomposition reactor 1 is successively connected via a pipe passing through the hot gas inlet and outlet of the first heat exchanger 3, and then connected with the adsorption inlet of the adsorption column device 7. The product gas generated by the decomposition of ammonia gas in the ammonia decomposition reactor 1 passes through the first heat exchanger 3 to preheat the raw material ammonia gas. The adsorption gas outlet of adsorption column device 7 connects with the hydrogen fuel inlet port 81 of fuel cell 8. The product gas that ammonia decomposition reactor 1 produces is passed through the adsorption column device 7 to remove residual NH₃. Afterwards, H₂ + N₂ mixed gas is passed into the fuel cell 8 as fuel. The stack outlet 82 of the fuel cell 8 communicates with the exhaust gas inlet of the adsorption column device 7 via the gas circulation system 9. The exhaust gas outlet of the adsorption column device 7 communicates with the exhaust gas combustion system 10, wherein the flue gas after combustion in the ammonia decomposition reactor 1 is a mixed gas of water vapor and nitrogen at 300-400 °C, which is used to provide thermal energy for subsequent thermal decomposition. The gas outlet of the first blower 5 passes through the cold air inlet and outlet of the second heat exchanger 6 successively by means of pipelines, and then merges with the fuel tank 4 gas outlet pipelines to connect to the fuel gas inlet 15 of the ammonia decomposition reactor 1, wherein the first blower 5 can introduce air to the ammonia decomposition reactor 1, thereby provide oxygen to the ammonia decomposition reactor 1. The fuel in the fuel tank 4, such as hydrogen-nitrogen mixture, or other fuel gas, uses oxygen as a combustion aid in ammonia combustion in the decomposition reactor 1 to produce flue gas, which provides heat energy for the decomposition of ammonia. The flue gas outlet 16 of the ammonia decomposition reactor 1 passes through the hot gas inlet and outlet of the second heat exchanger 6 successfully through a pipeline, and then connects with the flue gas inlet of the adsorption column device. The flue gas discharged from the flue gas outlet 16 passes through the second heat exchanger 6 to preheat the air blown in from the first blower 5, and then enters the adsorption column device 7. The adsorbent in the adsorption column device 7 undergoes thermal desorption. The air pipeline between the second heat exchanger 6 and the fuel gas inlet 15 is also provided with a preheater 20, and the air blown in from the first blower 5 passes through the second heat exchanger 6 after heat exchange, and then passes through the preheater 20 to be further preheated so that the preheating temperature reaches 300-450 ° C. Preferably, the preheater 20 is located between the second heat exchanger 6 and the fuel inlet 15 of the ammonia decomposition reactor 1 so that it is beneficial to save energy by the heating of the preheater. The fuel cell 8 is selected as a proton exchange membrane fuel cell, and the air outlet of the fuel cell 8 is set towards the direction close to the ammonia tank 2, and the outlet of the air-cooled stack blows to the ammonia tank 2 or the cabinet where the ammonia tank 2 is placed during its operation.

The present invention adopts a system thermal coupling scheme to blow the hot air (50-60°C) from the outlet of the air-cooled stack during the operation of the proton exchange membrane fuel cell to the ammonia tank or the cabinet where the ammonia tank is placed, and the other side of the cabinet wall is arranged with a vent, so that the hot air can be blown out from the outlet of the air-cooled reactor, discharged from the vent through the cabinet, and the temperature of the air in the cabinet (40-50°C) can be increased by thermal convection, thereby heating the ammonia tank and realizing the self-evaporation of ammonia. In addition, the present invention controls the temperature of the catalytic combustion by controlling the main influencing factors of the catalytic combustion in the ammonia decomposition reactor 1, i.e., the fuel flow rate, the air flow rate, and the preheating temperature so that the hydrogen-nitrogen mixture gas is catalytically combusted in the ammonia decomposition reactor 1. The temperature of the generated high-temperature flue gas is 600-680°C to fully decompose the ammonia gas in the ammonia reactor, maintain the reactivity of the catalyst in the ammonia reactor, and prevent the high temperature at the front end of the ammonia decomposition reactor 1 caused by flame burnback. A first heat exchanger 3 is arranged on the ammonia gas inlet 12 pipeline of the ammonia decomposition reactor 1 and the ammonia decomposition gas outlet 13 pipeline. The first heat exchanger 3 can exchange the heat of the high-temperature product at 400-500°C. The heat is given to the ammonia gas discharged from the ammonia tank 2 flowing in from the inlet of the ammonia reactor. Finally, the ammonia gas flowing in from the inlet of the ammonia decomposition reactor is heated to 200-300°C, wherein the main products of ammonia decomposition are hydrogen, nitrogen and undecomposed ammonia. On the air inlet pipeline of ammonia decomposition reactor 1 and on the flue gas outlet 16, there is provided with the second heat exchanger 6. The second heat exchanger 6 can use exhaust flue gas from the flue gas outlet 16 (at 500-600°C) to heat the inlet air, finally heating the inlet air to 250-350 °C to effectively improve the thermal efficiency of the system and reduce energy loss.

Further, the ammonia decomposition reactor 1 includes a reactor inner pipe 11 and a reactor outer pipe 14. The reactor inner pipe 11 is an ammonia decomposition zone, which is filled with an ammonia decomposition catalyst. Preferably, the selected ammonia decomposition catalyst is a highly active ruthenium-based catalyst with a working temperature of 450-500°C and high ammonia decomposition performance, which can reduce energy consumption while ensuring complete decomposition of ammonia. The outer tube 14 of the reactor is a catalytic combustion zone, which is filled with catalytic combustion catalysts. The reactor outer tube 1 4 is set on the outside of the reactor inner tube 11. The reactor inner tube 11 is provided with an ammonia gas inlet 12 and a decomposition gas outlet 13. The reactor outer tube 14 is provided with a fuel gas inlet 15 and flue gas outlet 16. Wherein ammonia decomposition reactor 1 is externally connected with fuel tank 4, and fuel tank 4 can provide fuel gas, such as hydrogen-nitrogen mixed gas as fuel. The high-temperature air is mixed into the outer tube 14 of the reactor, and the catalytic combustion reaction occurs under the action of the catalytic combustion catalyst to generate high temperature (600°C-680°C) to heat the inner tube 11 of the reactor to provide heat required for decomposing ammonia in the ammonia decomposition reactor 1. Certainly, one also can make the inner tube a catalytic combustion zone, and the outer tube an ammonia decomposition zone. When the inner tube is a catalytic combustion zone, the outer tube is an ammonia decomposition zone. It is the same when the inner tube is used as the ammonia decomposition zone and the outer tube is used as the catalytic combustion zone.

The air far exceeding the fuel is sent into the reactor outer pipe 14 through the first blower 5, and the temperature of the catalytic combustion can be kept stable by adjusting the amount of air sent in by the first blower 5 through the catalytic combustion temperature. When the air is less than a certain value, the supply of fuel is stopped and the heating of the preheater 20 is stopped so as to avoid flame combustion or explosion in the catalytic combustion. In addition, the present invention can realize the automation of temperature monitoring and air volume regulation through programming. This paragraph does not form part of the invention.

The gas circulation system 9 includes a condenser 91 and a gas-water separator 92 , the exhaust gas combustion system 10 includes a flame arrester 101 and an exhaust gas burner 102 , and the stack outlet 82 of the fuel cell 8 is connected to the condenser 91 and the gas-water separator 92 in sequence After that, it communicates with the exhaust gas inlet of the adsorption column device 7, and the exhaust gas outlet of the adsorption column device 7 passes through the flame arrester 101 and then communicates with the exhaust gas burner 102. The H₂O +H2+ N2 produced by the fuel cell 8 after the reaction. The H₂O in the exhaust gas mixture is condensed and liquefied by the condenser 91, separated and discharged by the gas-water separator 92, and the remaining H₂ +N₂ exhaust gas enters the adsorption column device 7 to desorb the NH₃ in the adsorbent, the desorbed exhaust gas enters the exhaust gas burner 102 for combustion. The air inlet of the adsorption column device 7 communicates with the external second blower 30, and the second blower 30 is used for rapidly cooling the adsorption column device 7, and the air outlet of the adsorption column device 7 communicates with the outside atmosphere through a pipeline and a valve.

As shown in Fig.2, the adsorption column device 7 includes two adsorption columns arranged in parallel, which are respectively an adsorption column A 71 and an adsorption column B 72, one of which is used for the adsorption of ammonia, and the other is used for the desorption of ammonia. cyclically in between. Each adsorption column includes an adsorption cavity 73 with adsorbent and a flue gas pipeline 74 , the adsorption cavity 73 is set on the outside of the flue gas pipeline 74 , and the adsorption column adopts an inner tube (flue gas pipeline 74) + an outer tube (adsorption cavity 73) structure, the inner tube is filled with high-temperature flue gas or low-temperature air, and the outer tube is filled with adsorbent and mixed gas of hydrogen, nitrogen and ammonia. The mixed gas discharged from the decomposition gas outlet 13 of the ammonia decomposition reactor 1 enters an adsorption column in the adsorption column device 7, the ammonia in the mixed gas is absorbed by the adsorbent in the adsorption column, and after the ammonia is removed , the H₂+N₂ mixed gas enters the fuel cell 8 through the hydrogen fuel inlet 8 1 as fuel, and desorption and desorption are performed after the adsorption amount of ammonia in the adsorbent reaches a certain level. Spiral fins are also provided on the flue gas pipeline 74 of the adsorption column device 7 to increase the contact surface area of the inner tube and the outer tube and improve heating or cooling efficiency, and valves are installed in the system gas circuit. When the desorption starts, cut the valve so that the high-temperature flue gas (300-350°C) produced by catalytic combustion flows through the flue gas pipeline 74 of the adsorption column device 7 to heat the adsorption column (200-300°C); when the desorption is about to end , cut the valve and use the second blower 30 to blow air into the flue gas pipeline 74 of the adsorption column device 7 , thereby rapidly cooling the adsorption column device 7. Through the gas coupling of the system, the heating and cooling speed of the adsorption column device 7 is increased and the electric heating loss during heating can be reduced.

The adsorption chamber 73 is provided with an adsorption/desorption inlet 731 and an adsorption/desorption outlet 732, the adsorption/desorption inlet 731 and the adsorption/desorption outlet 732 are a connected pair. The flue gas The pipeline 74 is provided with a smoke/air inlet 741 and a smoke/air outlet 742, the smoke/air inlet 741 and the smoke/air outlet 742 are a connected pair. When the adsorption/desorption air inlet 731 is connected to the decomposition gas outlet 13, it is the adsorption inlet of the adsorption column device 7, and the corresponding adsorption/desorption gas outlet 732 is the adsorption outlet of the adsorption column device 7. When the adsorption/desorption inlet 731 is connected to the stack outlet 82, it is the exhaust gas inlet of the adsorption column device 7, and the corresponding adsorption/desorption outlet 732 is exhaust gas outlet of the adsorption column device 7. When the smoke/air inlet 741 is connected to the smoke outlet 16 , it is the smoke inlet of the adsorption column device 7, and the corresponding smoke/air outlet 742 is the smoke outlet of the adsorption column device 7. When the smoke/air inlet 741 is connected to the second blower 30, it is the air inlet of the adsorption column device 7, and the corresponding smoke/air outlet 742 is the air outlet of the adsorption column device 7.

Further, the adsorption column device 7 is also provided with a first inlet a, a second inlet b, a third inlet c, and a fourth inlet d. The first inlet a and the second inlet b respectively pass through the gas path and the holes provided on the gas path. The valve is connected to the adsorption/desorption inlet 731, and the third inlet c and the fourth inlet d are respectively connected to the smoke/air inlet 741 through the gas circuit and the valve provided on the gas circuit.

In addition, a pressure reducing valve 40 and a flow controller 50 are also provided on the pipeline between the gas outlet end of the ammonia tank 2 and the first blower 5.

The present invention has following characteristics:
(1) The self-evaporation of ammonia can be realized: the hot air (50-60°C) from the outlet 82 of the stack of the fuel cell 8 is blown directly to the ammonia tank 2, or blows into the cabinet where the ammonia tank 2 is placed, and the air is blown by heat convection. Heating the ammonia tank 2 prevents the ammonia tank 2 from decreasing the flow rate due to the gasification of the liquid ammonia, absorbing heat and freezing to reduce the pressure of the ammonia at the outlet . Compared with external heating, energy consumption is reduced.
(2) The ammonia decomposition reactor adopts an inner tube + outer tube structure, which can carry out catalytic combustion and decomposition of ammonia at the same time. The reactor inner tube 11 is an ammonia decomposition zone, which is filled with an ammonia decomposition catalyst (such as a highly active ruthenium-based catalyst, which can achieve a higher ammonia decomposition conversion rate), and the reactor outer tube 14 is a catalytic combustion zone, which is filled with Catalytic combustion catalyst, the reactor outer tube 14 is set on the outside of the reactor inner tube 11 , the reactor inner tube 11 is provided with an ammonia gas inlet 12 and a decomposition gas outlet 13 , and the reactor outer tube 14 is equipped with Fuel gas inlet 15 and flue gas outlet 16. The fuel (hydrogen-nitrogen mixed gas, or other fuel gas) from the fuel tank 4 is mixed with the preheated high-temperature air into the outer tube 14 of the reactor, and a catalytic combustion reaction occurs under the action of the catalytic combustion catalyst to generate high temperature (600 ° C- 680°C) to heat the inner tube 1 1 of the reactor to provide the heat required for ammonia decomposition in the ammonia decomposition reactor 1.
(3) The system can deliver excess air, through the first blower 5, to the outer reaction tube 14 of the ammonia decomposition reactor 1. At the same time, the air sent in by the first blower 5 can be adjusted by the catalytic combustion temperature amount to keep the temperature of the catalytic combustion stable. When the air is less than a certain value, the supply of fuel is stopped and the heating of the preheater 20 is stopped, so as to avoid flame combustion or explosion in the catalytic combustion. In addition, the automation of temperature monitoring and air volume regulation can be realized through programming, which improves the stability of catalytic combustion and the controllability of temperature.
(4) The system of the present invention is equipped with two heat exchangers. After the high-temperature flue gas is heated to the ammonia decomposition reactor 1, it enters the second heat exchanger 6 to exchange heat with the air at the inlet, and the mixed gas of the decomposition gas outlet 1 of the ammonia decomposition reactor 1 enters the first heat exchanger 3 and the ammonia gas inlet 12 ammonia heat exchange on the pipeline, so as to improve the overall thermal efficiency of the system.
(5) For the adsorption column device, the present invention adopts the scheme of alternate adsorption-and-desorption of double adsorption columns, and the online self-desorption of the adsorption column can be realized by controlling the direction of the gas and the temperature rise and fall of the adsorption column.

The system of the present invention is divided into four states during operation. State one: adsorption column A is adsorbed, and adsorption column B is desorbed by heating up. State two: adsorption column A is adsorbed, and adsorption column B is cooled and desorbed. State three: adsorption column A is heated up for desorption, and the adsorption column B is adsorbed. State four: the adsorption column A cools down and desorbs, and the adsorption column adsorbs. After the system runs for a certain period of time, it will automatically switch to state one, two, three, four... cyclically. In this way, subsequent heating and cooling switching functions are realized.

Among them, the working status corresponding to each status is as follows:
State 1: When the adsorption column A is adsorbing, the temperature of the adsorption column B is desorbed. Through the valve control, the ammonia decomposition exhaust gas (hydrogen, nitrogen, ammonia mixture) enters the outer pipe of the adsorption column A from the first inlet a (the fifth valve i is opened, the sixth valve j, and the seventh valve k are closed), and then the adsorption The adsorption/desorption gas outlet 732 on the column A (at this time, the adsorption gas outlet) enters the fuel cell 8 , and at this time the adsorption column A should be at a low temperature (about 10-30°C) to maintain a good adsorption capacity; The exhaust gas (mixed gas of hydrogen, nitrogen, and water) at the outlet 82 passes through the condenser 91 and the water vapor separator 92, and the condensed water is discharged, and the remaining hydrogen and nitrogen are passed into the outside of the adsorption column B in the desorption state from the second inlet b. (The eighth valve m is open, the sixth valve j and the seventh valve k are closed) to realize the purging and desorption of the adsorbent in the adsorption column B. After desorption, go to the waste gas burner 102 from the adsorption/desorption gas outlet 732 (the exhaust gas outlet at this time) on the adsorption column B. Through valve control, the high-temperature flue gas at the outlet of heat exchanger 1 enters the inner pipe of adsorption column B from the third inlet c (the first valve e is opened, the second valve f, the third valve g, and the fourth valve h are closed) to heat The adsorption column B keeps the high temperature of the adsorption column to improve the desorption effect, and then goes to the exhaust gas burner 102 through the smoke/air outlet 742 on the adsorption column B. It can be equipped with an electric heating rod to achieve rapid temperature rise of the adsorption column. At this moment, the fan at the fourth entrance d is closed.
State 2: The adsorption column A is adsorbed, and the adsorption column B is cooled to desorb. The fifth valve i, the sixth valve j, the seventh valve k, and the eighth valve m are the same as the state one. Before adsorption column A is saturated, use a fan to blow low-temperature air from the fourth inlet d into the inner tube of adsorption column B in advance (the third valve g is opened, the first valve e, the second valve f, and the fourth valve h are closed), in order to realize rapid cooling of the high-temperature adsorption column, prepare for adsorption, and then go to the smoke/air outlet 742 on the adsorption column B to empty. At this time, the high-temperature flue gas is directly bypassed to the waste gas burner 102.
State 3: When the adsorption column B is adsorbed, the temperature of the adsorption column A is desorbed. Through the valve control, the ammonia decomposition exhaust gas (hydrogen, nitrogen, ammonia mixture) enters the outer pipe of the adsorption column B from the first inlet a (the sixth valve j is opened, the fifth valve i, and the eighth valve m are closed), and then by Then enter the fuel cell 8 through the adsorption/desorption gas outlet 732 on the adsorption column B (at this time, the adsorption gas outlet). At this time, the adsorption column B should be at a low temperature (about 10-30°C) to maintain a good adsorption capacity; the exhaust gas (hydrogen, nitrogen, water mixed gas) at the stack outlet 82 will The condensed water is drained away, and the remaining hydrogen and nitrogen are passed into the outer tube of the adsorption column A in the desorption state from the second inlet b (the seventh valve k is opened, the fifth valve i, and the eighth valve m are closed), so as to realize the adsorption Purge desorption of adsorbent in column A. After desorption, go to the waste gas burner 102 from the adsorption/desorption gas outlet 732 (the exhaust gas outlet at this time) on the adsorption column A. Through valve control, the high-temperature flue gas at the outlet of heat exchanger 1 enters the inner pipe of adsorption column A from the third inlet c (the second valve f is opened, the first valve e, the third valve g, and the fourth valve h are closed) to heat The adsorption column A keeps the high temperature of the adsorption column to improve the desorption effect, and then the smoke/air outlet 742 on the adsorption column A goes to the exhaust gas burner 102. It can be equipped with an electric heating rod to achieve rapid temperature rise of the adsorption column, at this time, the fan at the fourth inlet d is turned off.
State 4: The adsorption column B is adsorbed, and the adsorption column A is cooled and desorbed. The fifth valve i, the sixth valve j, the seventh valve k, and the eighth valve m are the same as the state one. Before adsorption of adsorption column B is saturated, blow low-temperature air from the fourth inlet d into the inner tube of adsorption column A in advance with a fan (the fourth valve h is opened, the first valve e, the second valve f, and the third valve g are closed), in order to realize rapid cooling (<3h) of the high-temperature adsorption column, prepare for adsorption, and then go to the smoke/air outlet 7 42 on the adsorption column A to evacuate . At this time, the flue gas directly goes to the waste gas burner 102 through the bypass.

State switching: switch to state 2 after running for 9 hours in state 1, switch to state 3 after running in state 2 for 3 hours, switch to state 4 after running in state 3 for 9 hours, switch to state 1 after running in state 4 for 3 hours...and so on.

Of course, the adsorption column device 7 can also be filled with adsorbent in the inner tube, and the outer tube can pass high-temperature flue gas or low-temperature air.

The following method does not form part of the invention. A power generation method of an ammonia fuel cell system capable of rapid adsorption and desorption switching by ammonia self-evaporation, comprising the following steps:
S 1. When starting up, fuel and preheated air are blown into the reactor outer pipe 14 of the ammonia decomposition reactor 1 , and after mixing, catalytic combustion reaction occurs to generate flue gas, thereby driving the reactor outer pipe 14 and the reaction Tube 11 heats up in the device ;
S 2. When the reactor inner tube 1 1 rises above 450°C, feed ammonia gas into the reactor inner tube 1 1 of the ammonia decomposition reactor 1 , and the ammonia gas decomposes under the action of the catalyst to generate hydrogen and nitrogen mixed gas;
S 3. Pass the hydrogen and nitrogen mixed gas generated in the reactor inner tube 11 through the first heat exchanger 3 and then pass it into the adsorption column device 7. After removing the residual ammonia in the hydrogen and nitrogen mixed gas, the remaining The hydrogen and nitrogen gas enters the fuel cell 8, thereby providing fuel for the fuel cell 8, and generating electric energy; wherein the first heat exchanger 3 transfers the temperature of the hydrogen-nitrogen mixture to the ammonia gas input by the ammonia tank 2; the reactor outer pipe 1 4 The flue gas passes through the second heat exchanger 6 and then enters the adsorption column device 7, and the second heat exchanger 6 converts the heat of the flue gas to the second blower 3 to input air.
S 4, passing the remaining hydrogen and nitrogen gas in the fuel cell 8 into the adsorption column device 7 for purging and desorption.

In order to improve the energy efficiency of the system, the heat exchanger in the system can transfer the heat of the flue gas at the outlet of the outer pipe 14 of the ammonia decomposition reactor 1 to the air at the inlet , or transfer the heat of the hydrogen and nitrogen at the outlet of the inner pipe 11 of the reactor Ammonia to the inlet. In order to realize online desorption, the unreacted hydrogen and nitrogen gas at the tail end of the fuel cell 8 is passed into the adsorption column 7 saturated with adsorption to purge and desorb the adsorbent, and the flue gas after heat exchange is passed into the adsorption column to be desorbed. The inner tube of 7 drives the temperature rise of the adsorption column 7 to improve the desorption efficiency.

The present invention can use the lithium battery to start the power supply for the system. After the fuel cell 8 starts to generate electricity, it can generate electricity for the lithium battery, and can also supply power for its own load and external load.

Apparently, the above-mentioned embodiments are only examples for clear description, rather than limiting the implementation.

## Claims

1. An ammonia fuel cell system capable of rapid adsorption-and-desorption switching by self-evaporation of ammonia, comprising:
an ammonia decomposition reactor (1);
an ammonia tank (2);
a first heat exchanger (3);
a fuel tank (4);
a first blower (5);
a second heat exchanger (6);
an adsorption column device (7),
a fuel cell (8),
a gas circulation system (9); and
an exhaust gas combustion system (10),
wherein an outlet of the ammonia tank (2), through the first heat exchanger (3), is in communication with the ammonia gas inlet (12) of the ammonia decomposition reactor (1),
wherein a decomposition gas outlet (13) of the ammonia decomposition reactor (1), through the first heat exchanger (3), is in communication with the adsorption inlet of the adsorption column device (7), wherein a product produced by the decomposition of ammonia gas in the ammonia decomposition reactor (1) preheats a raw ammonia gas via the first heat exchanger (3),
wherein the fuel tank (4) is in communication with the ammonia decomposition reactor (1) for feeding a fuel gas to the ammonia decomposition reactor (1),
wherein an adsorption gas outlet of the adsorption column device (7) is in communication with a hydrogen fuel inlet (81) of the fuel cell (8) to provide a mixture of hydrogen and nitrogen to the fuel cell (8),
wherein a stack outlet (82) of the fuel cell (8), via the gas circulation system (9), is in communication with an exhaust gas inlet of the adsorption column device (7),
wherein an exhaust gas outlet of the adsorption column device (7) is in communication with the exhaust gas combustion system (10),
wherein a gas outlet of the first blower (5), via the second heat exchanger (6), is in communication with a fuel gas inlet (15) of the ammonia decomposition reactor (1),
wherein a flue gas outlet (16) of the ammonia decomposition reactor (1), via the second heat exchanger (6), is in communication with the flue gas inlet of the adsorption column device (7), and
wherein a flue gas produced by the ammonia decomposition reactor (1) passes through the second heat exchanger (6), thereby preheating the air discharged by the first blower (5);
wherein the ammonia decomposition reactor (1) comprises a reactor inner tube (11) and a reactor outer tube (14), wherein the reactor inner tube (11) is an ammonia decomposition zone filled with an ammonia decomposition catalyst, and the reactor outer tube (14) is a catalytic combustion zone filled with a catalytic combustion catalyst, wherein the reactor outer tube (14) is set on the outside of the reactor inner tube (11), wherein two ends of the reactor inner tube (11) are respectively provided with the ammonia gas inlet (12) and the decomposition gas outlet (13), wherein the fuel gas inlet (15) and the flue gas outlet (16) are respectively provided on both sides of the reactor outer pipe (14), wherein the ammonia gas inlet (12) is in communication with the decomposition gas outlet (13), and the fuel gas inlet (15) is in communication with the flue gas outlet (16);
wherein the gas circulation system (9) comprises a condenser (91) and a gas-water separator (92), wherein the exhaust gas combustion system (10) comprises a flame arrester (101) and an exhaust gas burner (102), wherein the stack outlet (82) of the fuel cell (8) is sequentially connected to the condenser (91), the gas water separator (92), and then to the exhaust gas inlet of the adsorption column device (7), wherein the exhaust gas outlet of the adsorption column device (7) connects to the flame arrester (101) and then to the exhaust gas burner (102), wherein an air inlet of the adsorption column device (7) connects externally to the second blower (30), wherein the second blower (30) is used for rapid cooling of the adsorption column device (7), and wherein an air outlet of the adsorption column device (7) communicates with outside atmosphere through a pipeline and a valve.

2. The ammonia fuel cell system capable of rapid adsorption-and-desorption switching by self-evaporation of ammonia according to claim 1, wherein the ammonia decomposition catalyst is a ruthenium-based ammonia decomposition catalyst.

3. The ammonia fuel cell system capable of rapid adsorption-and-desorption switching by self-evaporation of ammonia according to claim 1, **characterized in that** the ammonia fuel cell system is configured such that the flue gas, at a temperature between 600 °C and 680 °C, is a mixture of water vapor and nitrogen produced by catalytic combustion of hydrogen and oxygen, and a product gas is a mixture of hydrogen, nitrogen and incompletely decomposed ammonia produced by catalytic decomposition of ammonia.

4. The ammonia fuel cell system capable of rapid adsorption-and-desorption switching by self-evaporation of ammonia according to claim 1, **characterized in that** an air outlet of the fuel cell (8) is set in a direction towards the ammonia tank (2).

5. The ammonia fuel cell system capable of rapid adsorption-and-desorption switching by self-evaporation of ammonia according to claim 1, **characterized in that** the fuel cell (8) is a proton exchange membrane fuel cell.

6. The ammonia fuel cell system capable of rapid adsorption-and-desorption switching by self-evaporation of ammonia according to claim 1, **characterized in that** a preheater (20) is provided on a pipeline between the first blower (5) and the ammonia decomposition reactor (1).

7. The ammonia fuel cell system capable of fast adsorption-and-desorption switching by self-evaporation of ammonia according to claim 1, **characterized in that** the adsorption column device (7) comprises at least two adsorption columns arranged in parallel to function alternately in adsorption-and-desorption of ammonia.

8. The ammonia fuel cell system capable of rapid adsorption-and-desorption switching by self-evaporation of ammonia according to claim 7, **characterized in that** the two adsorption columns of the adsorption column device (7) arranged in parallel are adsorption columns A (71) and adsorption column B (72), one of which is used for adsorption of ammonia while the other is used for desorption of ammonia to complete adsorption-and-desorption cycles repeatedly.

9. The ammonia fuel cell system capable of rapid adsorption-and-desorption switching by self-evaporation of ammonia according to claim 7, **characterized in that** each of the adsorption columns includes an adsorption chamber (73) equipped with an adsorbent and a flue gas pipeline (74), wherein the adsorption chamber (73) is set on the outside of the flue gas pipeline (74), and the adsorption chamber (73) is provided with an adsorption/desorption inlet (731), an adsorption/desorption outlet (732), wherein the adsorption/desorption inlet (731) and the adsorption/desorption outlet (732) are a connected pair; wherein the flue gas pipeline (74) is provided with smoke/air inlet (741) and smoke/air outlet (742), wherein the smoke/air inlet (741) and smoke/air outlet (742) are a connected pair;
wherein when the adsorption/desorption inlet (731) is connected to the decomposition gas outlet (13), it functions as the adsorption inlet of the adsorption column device (7), and the adsorption/desorption outlet (732) functions as the adsorption outlet of the adsorption column device (7); when the adsorption/desorption gas inlet (731) is connected to the stack outlet (82), it functions as the exhaust gas inlet of the adsorption column device (7), and the adsorption/desorption outlet (732) functions as the exhaust gas outlet of the adsorption column device (7);
wherein when the smoke/air inlet (741) is connected to the flue gas outlet(16), it functions as the exhaust gas inlet of the adsorption column device (7), and the smoke/air outlet (742) functions as the exhaust gas inlet of the adsorption column device (7);
wherein when the smoke/air inlet (741) is connected to the second blower (30), it functions as the air inlet of the adsorption column device (7), and the smoke/air outlet (742) functions as the air outlet of the adsorption column device (7).

10. The ammonia fuel cell system capable of rapid adsorption-and-desorption switching by self-evaporation of ammonia according to claim 9, **characterized in that** the adsorption column device (7) further comprises a first inlet (a), a second inlet (b), a third inlet (c) and a fourth inlet (d), wherein the first inlet (a) and the second inlet (b) are respectively connected to the adsorption/desorption inlet (731), and the third inlet (c) and the fourth inlet (d) are respectively connected to the smoke/air inlet (741) through a gas path and a valve on the gas path.

11. The ammonia fuel cell system capable of rapid adsorption-and-desorption switching by self-evaporation of ammonia according to claim 9, **characterized in that**, the outer wall of the flue gas pipeline (74) is provided with spiral fins (743).

12. The ammonia fuel cell system capable of fast adsorption-and-desorption switching by self-evaporation of ammonia according to claim 1, **characterized in that** a pressure reducing valve (40) and a flow controller (50) are provided on a pipeline between an air outlet of the ammonia tank (2) and the first blower (5).

## Patentansprüche

1. Ammoniak-Brennstoffzellensystem mit einer Fähigkeit zum schnellen Umschalten zwischen Adsorption und Desorption durch Selbstevaporation von Ammoniak, umfassend:
einen Ammoniakspaltreaktor (1),
einen Ammoniaktank (2),
einen ersten Wärmetauscher (3),
einen Brennstofftank (4),
einen ersten Gebläse (5),
einen zweiten Wärmetauscher (6),
eine Adsorptionssäulenvorrichtung (7),
eine Brennstoffzelle (8),
ein Gaszirkulationssystem (9) und
ein Abgasverbrennungssystem (10),
wobei der Ausgang des Ammoniaktanks (2) über den ersten Wärmetauscher (3) mit dem Ammoniakgaseinlass (12) des Ammoniakspaltreaktors (1) verbunden ist,
wobei ein Spaltgas-Auslass (13) des Ammoniakspaltreaktors (1) über den ersten Wärmetauscher (3) mit dem Adsorptionseinlass der Adsorptionssäulenvorrichtung (7) verbunden ist und ein durch die Spaltung von Ammoniak im Ammoniakspaltreaktor (1) erzeugtes Produktgas über den ersten Wärmetauscher (3) das Rohammoniak vorheizt,
wobei der Brennstofftank (4) mit dem Ammoniakspaltreaktor (1) verbunden ist, um diesem ein Brenngas zuzuführen,
wobei ein Adsorptionsgasauslass der Adsorptionssäulenvorrichtung (7) mit einem Wasserstoffbrennstoffeinlass (81) der Brennstoffzelle (8) verbunden ist, um dieser ein Gemisch aus Wasserstoff und Stickstoff zuzuführen,
wobei ein Stapelauslass (82) der Brennstoffzelle (8) über das Gaszirkulationssystem (9) mit einem Abgaseinlass der Adsorptionssäulenvorrichtung (7) verbunden ist,
wobei ein Abgasauslass der Adsorptionssäulenvorrichtung (7) mit dem Abgasverbrennungssystem (10) verbunden ist,
wobei ein Gasauslass des ersten Gebläses (5) über den zweiten Wärmetauscher (6) mit einem Brenngaseinlass (15) des Ammoniakspaltreaktors (1) verbunden ist,
wobei ein Rauchgasauslass (16) des Ammoniakspaltreaktors (1) über den zweiten Wärmetauscher (6) mit dem Rauchgaseinlass der Adsorptionssäulenvorrichtung (7) verbunden ist,
wobei ein vom Ammoniakspaltreaktor (1) erzeugtes Rauchgas durch den zweiten Wärmetauscher (6) strömt und dabei die aus dem ersten Gebläse (5) ausströmende Luft vorheizt,
wobei der Ammoniakspaltreaktor (1) ein Reaktorinnrohr (11) und ein Reaktoraußenrohr (14) umfasst, wobei das Reaktorinnenrohr (11) eine mit einem Ammoniakspaltkatalysator gefüllte Ammoniakspaltzone bildet und das Reaktoraußenrohr (14) eine mit einem katalytischen Verbrennungskatalysator gefüllte katalytische Verbrennungszone bildet, wobei das Reaktoraußenrohr (14) außerhalb des Reaktorinnenrohrs (11) angeordnet ist, wobei die beiden Enden des Reaktorinnenrohrs (11) jeweils mit dem Ammoniakgaseinlass (12) bzw. dem Spaltgasauslass (13) versehen sind, wobei der Brenngaseinlass (15) und der Rauchgasauslass (16) jeweils auf beiden Seiten des Reaktoraußenrohrs (14) angeordnet sind, wobei der Ammoniakgaseinlass (12) mit dem Spaltgasauslass (13) strömungsleitend verbunden ist und der Brenngaseinlass (15) mit dem Rauchgasauslass (16) strömungsleitend verbunden ist,
wobei das Gaszirkulationssystem (9) einen Kondensator (91) und einen Gas-Wasser-Abscheider (92) umfasst, wobei das Abgasverbrennungssystem (10) einen Flammensperrer (101) und einen Abgasbrenner (102) umfasst, wobei der Stapelauslass (82) der Brennstoffzelle (8) nacheinander mit dem Kondensator (91), dem Gas-Wasser-Abscheider (92) und anschließend mit dem Abgaseinlass der Adsorptionssäulenvorrichtung (7) verbunden ist, wobei der Abgasauslass der Adsorptionssäulenvorrichtung (7) über den Flammensperrer (101) mit dem Abgasbrenner (102) verbunden ist, wobei ein Lufteinlass der Adsorptionssäulenvorrichtung (7) extern mit einem zweiten Gebläse (30) verbunden ist, wobei das zweite Gebläse (30) zur schnellen Abkühlung der Adsorptionssäulenvorrichtung (7) dient, und wobei ein Luftauslass der Adsorptionssäulenvorrichtung (7) über eine Leitung und ein Ventil mit der Außenatmosphäre verbunden ist.

2. Ammoniak-Brennstoffzellensystem gemäß Anspruch 1, wobei der Ammoniakspaltkatalysator ein rutheniumbasierter Ammoniakspaltkatalysator ist.

3. Ammoniak-Brennstoffzellensystem gemäß Anspruch 1, **dadurch gekennzeichnet, dass** das Ammoniak-Brennstoffzellensystem derart ausgestaltet ist, dass das Rauchgas bei einer Temperatur zwischen 600 °C und 680 °C ein Gemisch aus Wasserdampf und Stickstoff ist, das durch die katalytische Verbrennung von Wasserstoff und Sauerstoff erzeugt wird, und dass das Produktgas ein Gemisch aus Wasserstoff, Stickstoff und unvollständig gespaltenem Ammoniak ist, das durch die katalytische Spaltung von Ammoniak erzeugt wird.

4. Ammoniak-Brennstoffzellensystem gemäß Anspruch 1, **dadurch gekennzeichnet, dass** ein Luftauslass der Brennstoffzelle (8) in Richtung des Ammoniaktanks (2) angeordnet ist.

5. Ammoniak-Brennstoffzellensystem gemäß Anspruch 1, **dadurch gekennzeichnet, dass** die Brennstoffzelle (8) eine Protonenaustauschmembran-Brennstoffzelle ist.

6. Ammoniak-Brennstoffzellensystem gemäß Anspruch 1, **dadurch gekennzeichnet, dass** ein Vorwärmer (20) in einer Leitung zwischen dem ersten Gebläse (5) und dem Ammoniakspaltreaktor (1) vorgesehen ist.

7. Ammoniak-Brennstoffzellensystem gemäß Anspruch 1, **dadurch gekennzeichnet, dass** die Adsorptionssäulenvorrichtung (7) mindestens zwei Adsorptionssäulen umfasst, die parallel angeordnet sind und abwechselnd für die Adsorption und Desorption von Ammoniak betrieben werden.

8. Ammoniak-Brennstoffzellensystem gemäß Anspruch 7, **dadurch gekennzeichnet, dass** die zwei parallel angeordneten Adsorptionssäulen der Adsorptionssäulenvorrichtung (7) eine Adsorptionssäule A (71) und eine Adsorptionssäule B (72) umfassen, von denen jeweils eine zur Adsorption von Ammoniak und die andere zur Desorption von Ammoniak betrieben wird, um wiederholt Adsorptions-/Desorptionszyklen durchzuführen.

9. Ammoniak-Brennstoffzellensystem gemäß Anspruch 7, **dadurch gekennzeichnet, dass** jede der Adsorptionssäulen eine Adsorptionskammer (73) mit einem Adsorbens und eine Rauchgasleitung (74) umfasst, wobei die Adsorptionskammer (73) außerhalb der Rauchgasleitung (74) angeordnet ist, wobei die Adsorptionskammer (73) mit einem Adsorptions-/Desorptionseinlass (731) und einem Adsorptions-/Desorptionsauslass (732) versehen ist, die ein zusammengehöriges Paar bilden, wobei die Rauchgasleitung (74) mit einem Rauch-/Lufteinlass (741) und einem Rauch-/Luftauslass (742) versehen ist, die ein zusammengehöriges Paar bilden,
wobei, wenn der Adsorptions-/Desorptionseinlass (731) mit dem Spaltgasauslass (13) verbunden ist, der Adsorptions-/Desorptionseinlass (731) als Adsorptionseinlass der Adsorptionssäulenvorrichtung (7) fungiert und der Adsorptions-/Desorptionsauslass (732) als Adsorptionsauslass fungiert, wobei, wenn der Adsorptions-/Desorptionseinlass (731) mit dem Stapelauslass (82) verbunden ist, der Adsorptions-/Desorptionseinlass (731) als Abgaseinlass der Adsorptionssäulenvorrichtung (7) fungiert und der Adsorptions-/Desorptionsauslass (732) als Abgasauslass fungiert,
wobei, wenn der Rauch-/Lufteinlass (741) mit dem Rauchgasauslass (16) verbunden ist, der Rauch-/Lufteinlass (741) als Rauchgaseinlass der Adsorptionssäulenvorrichtung (7) fungiert und der Rauch-/Luftauslass (742) als Rauchgasauslass fungiert,
wobei, wenn der Rauch-/Lufteinlass (741) mit dem zweiten Gebläse (30) verbunden ist, der Rauch-/Lufteinlass (741) als Lufteinlass der Adsorptionssäulenvorrichtung (7) fungiert und der Rauch-/Luftauslass (742) als Luftauslass fungiert.

10. Ammoniak-Brennstoffzellensystem gemäß Anspruch 9, **dadurch gekennzeichnet, dass** die Adsorptionssäulenvorrichtung (7) ferner einen ersten Einlass (a), einen zweiten Einlass (b), einen dritten Einlass (c) und einen vierten Einlass (d) umfasst, wobei der erste Einlass (a) und der zweite Einlass (b) jeweils mit dem Adsorptions-/Desorptionseinlass (731) verbunden sind, wobei der dritte Einlass (c) und der vierte Einlass (d) jeweils über einen Gasweg und ein auf dem Gasweg angeordnetes Ventil mit dem Rauch-/Lufteinlass (741) verbunden sind.

11. Ammoniak-Brennstoffzellensystem gemäß Anspruch 9, **dadurch gekennzeichnet, dass** die Außenwand der Rauchgasleitung (74) mit Spiralrippen (743) versehen ist.

12. Ammoniak-Brennstoffzellensystem gemäß Anspruch 1, **dadurch gekennzeichnet, dass** ein Druckminderventil (40) und ein Durchflussregler (50) in einer Leitung zwischen einem Luftauslass des Ammoniaktanks (2) und dem ersten Gebläse (5) vorgesehen sind.

## Revendications

1. Système de pile à combustible à l'ammoniac capable d'un commutateur rapide adsorption-désorption par auto-évaporation de l'ammoniac, comprenant :
un réacteur de décomposition de l'ammoniac (1) ;
un réservoir d'ammoniac (2) ;
un premier échangeur de chaleur (3) ;
un réservoir de carburant (4) ;
un premier souffleur (5) ;
un second échangeur de chaleur (6) ;
un dispositif de colonne d'adsorption (7) ;
une pile à combustible (8) ;
un système de circulation de gaz (9) ; et
un système de combustion des gaz d'échappement (10),
dans lequel une sortie du réservoir d'ammoniac (2), à travers le premier échangeur de chaleur (3), est en communication avec l'entrée de gaz ammoniac (12) du réacteur de décomposition d'ammoniac (1),
dans lequel une sortie de gaz de décomposition (13) du réacteur de décomposition d'ammoniac (1), à travers le premier échangeur de chaleur (3), est en communication avec l'entrée d'adsorption du dispositif de colonne d'adsorption (7), dans lequel un produit issu de la décomposition de l'ammoniac dans le réacteur (1) préchauffe l'ammoniac brut via le premier échangeur de chaleur (3),
dans lequel le réservoir de carburant (4) est en communication avec le réacteur de décomposition d'ammoniac (1) afin d'alimenter ledit réacteur en gaz carburant,
dans lequel une sortie de gaz adsorbé du dispositif de colonne d'adsorption (7) est en communication avec une entrée d'hydrogène (81) de la pile à combustible (8) afin de fournir un mélange d'hydrogène et d'azote à ladite pile,
dans lequel une sortie de pile (82) de la pile à combustible (8), via le système de circulation de gaz (9), est en communication avec une entrée de gaz d'échappement du dispositif de colonne d'adsorption (7),
dans lequel une sortie de gaz d'échappement du dispositif de colonne d'adsorption (7) est en communication avec le système de combustion des gaz d'échappement (10),
dans lequel une sortie de gaz du premier souffleur (5), via le second échangeur de chaleur (6), est en communication avec une entrée de gaz carburant (15) du réacteur de décomposition d'ammoniac (1),
dans lequel une sortie de gaz de fumée (16) du réacteur de décomposition d'ammoniac (1), via le second échangeur de chaleur (6), est en communication avec l'entrée de gaz de fumée du dispositif de colonne d'adsorption (7), et
dans lequel un gaz de fumée produit par le réacteur de décomposition d'ammoniac (1) traverse le second échangeur de chaleur (6) préchauffant ainsi l'air expulsé par le premier souffleur (5),
dans lequel le réacteur de décomposition d'ammoniac (1) comprend un tube interne de réacteur (11) et un tube externe de réacteur (14), ledit tube interne (11) constituant une zone de décomposition de l'ammoniac remplie d'un catalyseur de décomposition, et ledit tube externe (14) constituant une zone de combustion catalytique remplie d'un catalyseur de combustion, le tube externe (14) étant disposé autour du tube interne (11), dans lequel deux extrémités du tube interne (11) sont respectivement pourvues de l'entrée de gaz ammoniac (12) et de la sortie de gaz de décomposition (13), dans lequel l'entrée de gaz carburant (15) et la sortie de gaz de fumée (16) sont respectivement disposées de part et d'autre du tube externe (14), dans lequel l'entrée de gaz ammoniac (12) est en communication avec la sortie de gaz de décomposition (13) et l'entrée de gaz carburant (15) est en communication avec la sortie de gaz de fumée (16),
dans lequel le système de circulation de gaz (9) comprend un condenseur (91) et un séparateur gaz-eau (92), dans lequel le système de combustion des gaz d'échappement (10) comprend un pare-flamme (101) et un brûleur de gaz d'échappement (102), dans lequel la sortie (82) de la pile à combustible (8) est connectée successivement au condenseur (91), au séparateur gaz-eau (92) puis à l'entrée de gaz d'échappement du dispositif de colonne d'adsorption (7), dans lequel la sortie de gaz d'échappement du dispositif (7) est connectée au pare-flamme (101) puis au brûleur (102), dans lequel une entrée d'air du dispositif (7) est connectée à un second souffleur (30), lequel est utilisé pour un refroidissement rapide du dispositif de colonne d'adsorption (7), et dans lequel une sortie d'air du dispositif (7) communique avec l'atmosphère extérieure via une conduite et une vanne.

2. Système selon la revendication 1, dans lequel le catalyseur de décomposition de l'ammoniac est un catalyseur de décomposition à base de ruthénium.

3. Système selon la revendication 1, **caractérisé en ce que** le système est configuré de manière que le gaz de fumée, à une température comprise entre 600 °C et 680 °C, soit un mélange de vapeur d'eau et d'azote produit par combustion catalytique d'hydrogène et d'oxygène, et qu'un gaz produit soit un mélange d'hydrogène, d'azote et d'ammoniac partiellement décomposé produit par décomposition catalytique de l'ammoniac.

4. Système selon la revendication 1, **caractérisé en ce que** une sortie d'air de la pile à combustible (8) est orientée en direction du réservoir d'ammoniac (2).

5. Système selon la revendication 1, **caractérisé en ce que** la pile à combustible (8) est une pile à membrane échangeuse de protons.

6. Système selon la revendication 1, **caractérisé en ce que** un préchauffeur (20) est disposé sur une conduite entre le premier souffleur (5) et le réacteur de décomposition d'ammoniac (1).

7. Système selon la revendication 1, **caractérisé en ce que** le dispositif de colonne d'adsorption (7) comprend au moins deux colonnes d'adsorption disposées en parallèle pour fonctionner alternativement en adsorption et désorption de l'ammoniac.

8. Système selon la revendication 7, **caractérisé en ce que** les deux colonnes d'adsorption disposées en parallèle sont une colonne A (71) et une colonne B (72), dont l'une est utilisée pour l'adsorption de l'ammoniac tandis que l'autre est utilisée pour la désorption, permettant l'alternance répétée des cycles adsorption-désorption.

9. Système selon la revendication 7, **caractérisé en ce que** chacune des colonnes d'adsorption comprend une chambre d'adsorption (73) équipée d'un adsorbant et une conduite de gaz de fumée (74), la chambre d'adsorption (73) étant disposée autour de la conduite de fumées (74), et ladite chambre (73) étant pourvue d'une entrée adsorption/désorption (731) et d'une sortie adsorption/désorption (732), constituant une paire reliée, la conduite de fumées (74) étant pourvue d'une entrée fumées/air (741) et d'une sortie fumées/air (742), constituant une paire reliée,
dans lequel lorsque l'entrée adsorption/désorption (731) est connectée à la sortie de gaz de décomposition (13), elle fonctionne comme entrée d'adsorption du dispositif (7), et la sortie adsorption/désorption (732) comme sortie d'adsorption ;
lorsque ladite entrée (731) est connectée à la sortie (82) de la pile, elle fonctionne comme entrée de gaz d'échappement du dispositif (7), et la sortie (732) fonctionne comme sortie de gaz d'échappement ;
dans lequel lorsque l'entrée fumées/air (741) est connectée à la sortie de gaz de fumée (16), elle fonctionne comme entrée de gaz d'échappement, et la sortie fumées/air (742) comme sortie d'échappement ;
dans lequel lorsque l'entrée fumées/air (741) est connectée au second souffleur (30), elle fonctionne comme entrée d'air du dispositif (7), et la sortie (742) comme sortie d'air.

10. Système selon la revendication 9, **caractérisé en ce que** le dispositif de colonne d'adsorption (7) comprend en outre une première entrée (a), une deuxième entrée (b), une troisième entrée (c) et une quatrième entrée (d), les première (a) et deuxième (b) étant respectivement reliées à l'entrée adsorption/désorption (731), et les troisième (c) et quatrième (d) étant respectivement reliées à l'entrée fumées/air (741) via un trajet de gaz et une vanne disposée sur ledit trajet.

11. Système selon la revendication 9, **caractérisé en ce que** la paroi externe de la conduite de gaz de fumée (74) est pourvue d'ailettes hélicoïdales (743).

12. Système selon la revendication 1, **caractérisé en ce que** une vanne de détente (40) et un contrôleur de débit (50) sont disposés sur une conduite entre une sortie d'air du réservoir d'ammoniac (2) et le premier souffleur (5).
